# EUROPÄISCHE PATENTSCHRIFT

(11) **EP 4 210 981 B1**
(45) Veröffentlichungstag und Bekanntmachung des Hinweises auf die Patenterteilung: **02.10.2024**
(21) Anmeldenummer: 21769384.5
(22) Anmeldetag: 24.08.2021
(51) Int. Cl.: B60K 1/00, B60K 11/02, F01M 1/02

(54) **VORRICHTUNG ZUR FLUIDVERSORGUNG EINES ELEKTRISCHEN ANTRIEBSTRANGS**
APPARATUS FOR SUPPLYING FLUID TO AN ELECTRIC DRIVE TRAIN
APPAREIL D'ALIMENTATION EN FLUIDE D'UNE CHAÎNE CINÉMATIQUE ÉLECTRIQUE

(30) Priorität: 10.09.2020 DE 102020123590
(43) Veröffentlichungstag der Anmeldung: 19.07.2023
(73) Patentinhaber: MAN Truck & Bus SE, 80995 München (DE)
(72) Erfinder: BEIERER, Philipp, 80995 München (DE); REITER, Thomas, 80995 München (DE); SCHNÄDELBACH, Tim, 91278 Pottenstein (DE); KOHRS, Christian, 73207 Plochingen (DE)
(74) Vertreter: v. Bezold & Partner Patentanwälte - PartG mbB
(86) Internationale Anmeldenummer: PCT/EP2021/073403
(87) Internationale Veröffentlichungsnummer: WO 2022/053308

(56) Entgegenhaltungen:
- WO-A1-2020/001908
- DE-A1- 102005 013 137
- DE-A1- 102015 216 737
- US-B2- 8 912 691
- US-B2- 9 853 523

## Beschreibung

Die Erfindung betrifft eine Vorrichtung zur Fluidversorgung eines elektrischen Antriebsstrangs für ein Kraftfahrzeug, sowie ein Kraftfahrzeug, vorzugsweise ein Nutzfahrzeug, mit einer solchen Vorrichtung.

Zur Ölversorgung eines elektrischen Antriebsstrangs für ein Kraftfahrzeug, beispielsweise um Öl zur Kühlung und Schmierung eines Getriebes bzw. bei einem kombinierten Ölhaushalt mit einem Elektromotor auch Öl für den Elektromotor bereitzustellen, sind aus dem Stand der Technik verschiedene Vorrichtungen bekannt.

Beispielsweise zeigt die WO 2020/001908 A1 ein Mehrzweck-Hydrauliksystem für ein Kraftfahrzeug, das einen primären Hydraulikkreis, einen sekundären Hydraulikkreis und ein Umschaltventil aufweist. Der primäre Hydraulikkreislauf weist eine primäre Hydraulikpumpe und mindestens eine primäre Benutzungsvorrichtung auf, die mit einer Förderleitung der primären Hydraulikpumpe verbunden ist. Der sekundäre Hydraulikkreislauf weist eine elektrisch betätigte sekundäre Hydraulikpumpe und mindestens eine sekundäre Benutzungsvorrichtung auf, die mit einer Förderleitung der sekundären Hydraulikpumpe in Verbindung steht. Das Umschaltventil ist so konfiguriert, dass es die Förderleitung der sekundären Hydraulikpumpe in Abhängigkeit vom Betriebszustand der primären Hydraulikpumpe mit der sekundären Benutzungsvorrichtung oder mit der primären Benutzungsvorrichtung verbindet.

Die einfachste Art der Ölversorgung basiert auf einer Konstantpumpe, d. h. einer Pumpe mit konstantem Schluckvolumen, die direkt an einen Antrieb gekoppelt ist. Damit einhergehend ergibt sich ein Förderstrom in Abhängigkeit von der Antriebsdrehzahl. Bei Anwendungen, bei denen sich der Ölbedarf zur Kühlung und Schmierung nicht linear mit der Drehzahl des Antriebs ändert, besteht die Gefahr der Ölunterversorgung, wenn sich die Pumpe zu langsam dreht, mit dem Risiko eines Bauteilversagens durch z. B. Mangelschmierung bzw. Überhitzung. Demgegenüber kann es auch zur Überversorgung kommen, wenn die Pumpe mehr Öl fördert als zur Schmierung und Kühlung erforderlich. Als Konsequenz führt dies zu einer Verschlechterung des Gesamtwirkungsgrads, da das überschüssige Öl ungenutzt über eine Drossel dem Reservoir zurückgeführt wird. Parallel dazu steigt das Risiko von unzulässigen Leckagen, da der Druck im System in Folge des Ölüberangebots über den üblichen Bereich hinaus ansteigen kann.

Aufgrund der genannten Mängel finden nach dem Stand der Technik insbesondere zwei Varianten Verwendung. Zum einen kombiniert man einfache Konstantpumpen mit einem drehzahlvariablen Antrieb, z. B. einem Elektromotor, der explizit nur die Pumpe antreibt. Diese Lösung ist sehr flexibel und sehr gut geeignet zur Regelung auf Basis externer Größen. Nachteilig ist der zusätzliche Bauraumbedarf für den Pumpenantrieb und die aus der zusätzlichen Komponente, nämlich nur zum Pumpenantrieb vorgesehenen Motors, resultierenden hohen Kosten.

Als Kompromiss ist aus der Praxis der Einsatz von Verstellpumpen, d. h. Pumpen mit variablem Schluckvolumen, bekannt. Hier erfolgt der Antrieb z. B. über einen Nebenabtrieb, d. h. die Drehzahl kann nicht beliebig an die Anforderungen der Ölfördermenge angepasst werden. Entsprechend wird über eine Einstellung des Pumpenschluckvolumens der Massenstrom bedarfsgerecht verändert. Prinzipiell sind hier sowohl Steuerung als auch Regelung für die Anpassung des Schluckvolumens denkbar. Üblicherweise liegen die Kosten dieser Variante zwischen der Lösung mit einem elektrischen Antrieb und der Variante einer Konstantpumpe an einem Nebenabtrieb.

Der Erfindung liegt die Aufgabe zu Grunde, eine verbesserte Vorrichtung zur Fluidversorgung eines elektrischen Antriebsstrangs bereitzustellen, mit dem Nachteile bekannter Vorrichtungen zumindest teilweise vermieden werden können. Insbesondere soll eine Vorrichtung mit verbessertem Gesamtwirkungsgrad, kompakterer Bauweise und/oder kostengünstigerer Herstellung bereitgestellt werden.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem allgemeinen Aspekt der Erfindung wird eine Vorrichtung zur Fluidversorgung eines elektrischen Antriebstrangs für ein Kraftfahrzeug bereitgestellt. Die Vorrichtung zur Fluidversorgung dient vorzugsweise zur Kühlung und Schmierung eines Getriebes und/oder zur Ölversorgung eines Elektromotors des elektrischen Antriebsstrangs. Das Kraftfahrzeug kann ein Nutzfahrzeug sein, bevorzugt ein Nutzfahrzeug zur Güter- oder Personenbeförderung mit einer zulässigen Höchstgeschwindigkeit größer 60 km/h.

Die Vorrichtung umfasst eine als hydraulische Konstantpumpe ausgebildete erste Pumpe zur Förderung von Fluid aus einem Fluidreservoir zum elektrischen Antriebsstrang. Die erste Pumpe wird nachfolgend als Hauptpumpe bezeichnet. Die Vorrichtung umfasst ferner mindestens eine als hydraulische Konstantpumpe ausgebildete zweite Pumpe, nachfolgend bezeichnet als Behelfspumpe. Die Hauptpumpe und die Behelfspumpe sind von dem Getriebe des elektrischen Antriebsstrangs mechanisch angetrieben, derart, dass zwischen einer Pumpendrehzahl der Hauptpumpe und einer Pumpendrehzahl der Behelfspumpe ein festes Übersetzungsverhältnis besteht. Das Übersetzungsverhältnis kann 1:1 sein, wenn Hauptpumpe und Behelfspumpe beispielsweise von der gleichen Welle des Getriebes angetrieben werden.

Die Behelfspumpe ist mittels einer steuerbaren Stelleinrichtung zur Fluidversorgung des elektrischen Antriebsstrangs wahlweise zuschaltbar, d. h. die Stelleinrichtung ist so ansteuerbar, dass die Behelfspumpe entweder in den gleichen Fluidkreis wie die Hauptpumpe fördert oder die Behelfspumpe lediglich im Umlaufbetrieb betrieben wird, so dass deren Volumenstrom lediglich in einem der Behelfspumpe zugeordneten Teilkreis umgewälzt wird. Unter dem Zuschalten der Behelfspumpe wird somit das Zuschalten des von der Behelfspumpe geförderten Fluidstroms zur Fluidversorgung des elektrischen Antriebsstrangs verstanden. Anstatt nur einer Behelfspumpe können auch mehrere Behelfspumpen vorgesehen sein, die mittels der steuerbaren Stelleinrichtung zur Fluidversorgung des elektrischen Antriebsstrangs wahlweise zuschaltbar sind.

Vorteilhaft werden somit mindestens zwei mechanisch angetriebene Hydraulikpumpen mit konstantem Schluckvolumen bereitgestellt, die bedarfsgerecht kombiniert werden können, um deren Gesamtfördervolumen an den Fluidbedarf des elektrischen Antriebsstrangs anpassen zu können. Es kann ausreichend Fluid für den elektrischen Antriebstrang bereitgestellt und gleichzeitig ein Fluidüberschuss möglichst geringgehalten werden, ohne dass ein separater Pumpenantrieb vonnöten wäre. Somit kann die erfindungsgemäße Vorrichtung einen verbesserten Gesamtwirkungsgrad bei gleichzeitig geringen Kosten und geringem Bauraumbedarf erzielen.

So ist der jeweilige Volumenstrom der Hauptpumpe und der Behelfspumpe linear abhängig von der Drehzahl des Getriebes. Demgegenüber steht ein Fluidbedarf des elektrischen Antriebsstrangs als Funktion der jeweiligen Leistung. Entsprechend sind Betriebszustände des elektrischen Antriebsstrangs denkbar, die z. B. von der Fahrzeuggeschwindigkeit bzw. der Pumpendrehzahl entkoppelt sind. Durch die wahlweise Zuschaltbarkeit der Behelfspumpe zum Fluidkreis ist es möglich, den Fluidbedarf des elektrischen Antriebsstrangs effektiv und kontinuierlich zu decken.

Ferner vorteilhaft ist die Vorrichtung kompakt und kostengünstig, da für die beiden Pumpen keine eigenen Antriebe, z. B. eigene Elektromotoren, notwendig sind, sondern die Pumpen durch das Getriebe des Kraftfahrzeugs angetrieben werden. Zudem sind die Hauptpumpe und die Behelfspumpe nicht als Verstellpumpen, sondern als wesentlich kostengünstigere Konstantpumpen ausgebildet.

Eine Konstantpumpe ist eine Pumpe mit konstantem Schluckvolumen. Zwischen einer Pumpendrehzahl und einem Fördervolumen der Konstantpumpe besteht bekanntlich ein linearer Zusammenhang. Das Schluckvolumen der Hauptpumpe und der Behelfspumpe kann identisch sein oder in einem beliebigen, konstanten Verhältnis zueinander stehen.

Eine der beiden Pumpen, in diesem Zusammenhang diejenige, die als Hauptpumpe bezeichnet ist, kann kontinuierlich Fluid in den Fluidkreis hin zum elektrischen Antriebsstrang fördern, zumindest bei einer Drehrichtung des Getriebes, die einer Vorwärtsfahrt des Kraftfahrzeugs entspricht. Anders ausgedrückt, kann die Hauptpumpe permanent mit einem hydraulischen Kreis der Fluidversorgung des elektrischen Antriebstrangs verbunden bzw. zu diesem zugeschaltet sein. Die mindestens eine zuschaltbare Behelfspumpe kann selektiv in den gleichen hydraulischen Kreis wie die Hauptpumpe zur Fluidversorgung des elektrischen Antriebsstrangs fördern oder lediglich im Umlaufbetrieb betrieben werden, so dass deren Volumenstrom lediglich in einem der Behelfspumpe zugeordneten Teilkreis umgewälzt wird. Das optionale Zuschalten des Förderstroms der Behelfspumpe, so dass dieser hin zum elektrischen Antrieb zu dessen Fluidversorgung gefördert wird, erfolgt mittels der steuerbaren Stelleinrichtung.

Das Fluid kann Öl und/oder andere Schmiermittel sein oder umfassen.

Gemäß einer besonders bevorzugten Ausführungsform ist die Hauptpumpe über eine erste Fluidleitung, nachfolgend Versorgungsleitung, mit dem elektrischen Antriebsstrang fluidisch verbunden. Unter dem Ausdruck "über eine Versorgungsleitung mit dem elektrischen Antriebsstrang fluidisch verbunden" wird verstanden, dass der von der Hauptpumpe geförderte Fluidstrom über die Versorgungsleitung einem Fluidkreis oder Teilfluidkreis zugeführt wird, der zur Fluidversorgung des elektrischen Antriebstrangs des Kraftfahrzeugs vorgesehen ist, vorzugsweise zur Kühlung und Schmierung eines Getriebes und/oder zur Ölversorgung eines Elektromotors des elektrischen Antriebsstrangs. Gemäß dieser Ausführungsform ist die Behelfspumpe in einer zweiten Fluidleitung, nachfolgend Behelfsleitung, angeordnet. Zum Zuschalten der Behelfspumpe zur Fluidversorgung des elektrischen Antriebsstrangs ist die Behelfsleitung mittels der steuerbaren Stelleinrichtung mit der Versorgungsleitung selektiv fluidisch verbindbar, d. h. die Behelfsleitung ist wahlweise mit der Verbindungsleitung fluidisch verbindbar oder fluidisch von dieser trennbar. Das optionale Zuschalten der Behelfspumpe zum Fluidkreis des elektrischen Antriebsstrangs erfolgt gemäß dieser Ausführungsform durch das optionale Zuleiten des von der Behelfspumpe geförderten Fluidstroms in die Versorgungsleitung der Hauptpumpe, was mit der Stelleinrichtung gesteuert wird.

Die steuerbare Stelleinrichtung kann eine steuerbare Ventileinrichtung, vorzugsweise ein mechanisch, hydraulisch, pneumatisch oder elektrisch ansteuerbares Wegeventil aufweisen. Das Wegeventil kann ein Proportional-Wegeventil sein. Die Ventileinrichtung kann ausgeführt sein, bei entsprechender Ansteuerung die Behelfsleitung mit der Versorgungsleitung fluidisch zu verbinden, um die Behelfspumpe zur Fluidversorgung des elektrischen Antriebsstrangs zuzuschalten.

Die steuerbare Ventileinrichtung kann ein hydraulisch gesteuertes Wegeventil aufweisen. Das hydraulisch gesteuerte Wegeventil kann ausgebildet sein, das wahlweise Zuschalten der Behelfspumpe selbsttätig (automatisch) als Funktion von mindestens einer Zustandsgröße im hydraulischen Kreis der Fluidversorgung zu steuern. Die Zustandsgröße kann ein Druck im hydraulischen Kreis sein oder umfassen.

Der Druck im Fluidkreis, z. B. Ölkreis, ergibt sich aus Gesamtfördermenge und den Strömungswiderständen im System. Letzteres steigt z. B. überproportional bei kalten Betriebsbedingungen, wenn die Startviskosität des Fluides deutlich über der normalen Betriebsviskosität liegt. Der Systemdruck wirkt über eine geeignete Wirkfläche auf die Ventileinrichtung, z. B. ein Wegeventil, d. h. steuert dieses gemäß einer Ausführungsvariante bei steigendem Druck um, so dass der Massenstrom der Behelfspumpe ganz bzw. teilweise in der Behelfspumpe umgewälzt wird.

Alternativ kann die steuerbare Ventileinrichtung eine elektrisch ansteuerbare Ventileinrichtung, vorzugsweise ein elektrisch ansteuerbares Wegeventil, sein oder aufweisen. Die Vorrichtung kann ausgebildet sein, die Ventileinrichtung in Abhängigkeit von zumindest einer der folgenden Größen elektrisch anzusteuern: einem Datenbussignal, beispielsweise einem CAN-Signal (CAN: Controller Area Network), einem sensorisch erfassten oder durch einen Fahrzeugrechner bereitgestellten Messsignal, einer Gangstufe des Getriebes, und auf Basis von physikalischen Kräften oder Druck im hydraulischen Kreis der Fluidversorgung. Der Fahrzeugrechner kann ein Fahrzeugführungsrechner sein. Die vorstehend genannten Größen könnten beispielsweise über geeignete Sensoren aufgenommen bzw. vom Fahrzeugrechner bereitgestellt, weiterverarbeitet und als Ausgangssignal an die Ventileinrichtung geleitet und von dieser als Steuersignal empfangen werden. Der Fahrzeugrechner kann optional ausgebildet sein, aus einer oder mehreren der vorgenannten Größen ein Maß für den Fluidbedarf zur Fluidversorgung des elektrischen Antriebsstrangs einerseits und der von der Hauptpumpe und Behelfspumpe momentan geförderten Volumenstrom andererseits abzuleiten und zu bestimmen, ob die Behelfspumpe zur Fluidversorgung zugeschaltet werden soll oder nicht und die Ventileinrichtung entsprechend anzusteuern.

Vorstehend wurde festgestellt, dass die Hauptpumpe und die Behelfspumpe von dem Getriebe des elektrischen Antriebsstrangs mechanisch angetrieben sind. Beide Pumpen sind dabei vorzugsweise direkt an eine Welle des Getriebes gekoppelt. Beispielsweise können die Hauptpumpe und die Behelfspumpe von einer gleichen Getriebewelle des Getriebes angetrieben sein und entsprechend die gleiche Drehzahl aufweisen. Alternativ kann die Hauptpumpe und die Behelfspumpe jeweils von einer unterschiedlichen Welle des Getriebes angetrieben sein und entsprechend eine festes Übersetzungsverhältnis zwischen beiden Pumpendrehzahlen bestehen. Ein von der Hauptpumpe geförderter Volumenstrom und ein von der Behelfspumpe geförderter Volumenstrom hängt linear von einer jeweiligen Pumpendrehzahl ab. Der von der Hauptpumpe geförderte Volumenstrom und der von der Behelfspumpe geförderte Volumenstrom hängt linear von einer Antriebsdrehzahl der jeweils antreibenden Welle ab.

Vorteilhaft ist aufgrund der gleichen linearen Abhängigkeit von der Antriebsdrehzahl der Getriebewelle eine vereinfachte Abstimmung der geförderten Volumenströme beider Pumpen möglich, um einen gewünschten Gesamtvolumenstrom entsprechend des Fluidbedarfs des elektrischen Antriebsstrangs einstellen zu können.

Gemäß einer weiteren Variante kann die Stelleinrichtung ausgebildet sein, einen Anteil des von der Behelfspumpe geförderten Volumenstroms, der nicht zur Fluidversorgung des elektrischen Antriebsstrangs verwendet wird, über eine Rückführleitung in das Fluidreservoir und/oder stromauf zur Behelfspumpe zurückzuführen. Die Begriffe "stromab" und "stromauf" beziehen sich auf die Strömungsrichtung des Fluides bei einer Drehrichtung des Getriebes bei Vorwärtsfahrt des Fahrzeugs.

Vorteilhaft kann Fluid solange in dem der Behelfspumpe zugeordneten Teilkreis zirkulieren, bis es über die Stelleinrichtung zur Fluidversorgung des elektrischen Antriebsstrangs in die Versorgungsleitung geleitet wird.

Gemäß einer weiteren Ausführungsvariante kann die Vorrichtung ferner einen stromab der Hauptpumpe angeordneten Rückflussverhinderer, vorzugsweise ein Rückschlagventil, zur Verhinderung eines Fluidrückflusses in Richtung der Hauptpumpe umfassen, vorzugsweise bei Drehzahlumkehr des Getriebes, beispielsweise bei Rückwärtsfahrt. Der Rückflussverhinderer kann in der Versorgungsleitung angeordnet sein.

Vorteilhaft sorgt der Rückflussverhinderer insbesondere bei Drehrichtungsumkehr für die Abkopplung der Hauptpumpe vom hydraulischen Kreis der Fluidversorgung.

Gemäß einer weiteren Ausführungsform kann von der Versorgungsleitung stromab der Hauptpumpe eine erste Nachsaugleitung abzweigen und im Fluidreservoir münden. In der ersten Nachsaugleitung kann ein erstes Nachsaugventil, vorzugsweise Rückschlagventil, angeordnet sein zur Verhinderung eines Unterdruckes an der Hauptpumpe. Der Hauptpumpe kann bei einer Drehrichtung des Getriebes, die einem Rückwärtsfahrbetrieb des Kraftfahrzeugs entspricht, Fluid über die erste Nachsaugleitung zugeführt werden.

Vorteilhaft verhindert das erste Nachsaugventil unzulässige Unterdrücke bzw. daraus resultierend Schäden an der Hauptpumpe. Ferner vorteilhaft kann die Hauptpumpe bei Drehzahlumkehr des Getriebes, beispielsweise bei Rückwärtsfahrt des Kraftfahrzeugs, über die erste Nachsaugleitung im Umlaufbetrieb betrieben werden.

Gemäß einer weiteren Variante kann von der Behelfsleitung stromab der Behelfspumpe eine zweite Nachsaugleitung abzweigen und im Fluidreservoir oder in der Behelfsleitung stromauf der Behelfspumpe münden. In der zweiten Nachsaugleitung kann ein zweites Nachsaugventil, vorzugsweise Rückschlagventil, angeordnet sein zur Verhinderung eines Unterdruckes an der Behelfspumpe. Der Behelfspumpe kann bei einer Drehrichtung des Getriebes, die einem Rückwärtsfahrbetrieb des Kraftfahrzeugs entspricht, Fluid über die zweite Nachsaugleitung zugeführt werden.

Vorteilhaft verhindert das zweite Nachsaugventil unzulässige Unterdrücke bzw. daraus resultierende Schäden an der Behelfspumpe. Ferner vorteilhaft kann die Behelfspumpe bei Drehzahlumkehr des Getriebes über die zweite Nachsaugleitung im Umlaufbetrieb betrieben werden.

Gemäß einer weiteren Ausführungsvariante kann die Vorrichtung derart ausgeführt sein, dass sich beim Zuschalten der Behelfspumpe die Volumenströme von Hauptpumpe und Behelfspumpe zur Versorgung des elektrischen Antriebsstrangs addieren und im nicht-zugeschalteten Zustand der Behelfspumpe deren Volumenstrom lediglich in dem der Behelfspumpe zugeordneten Teilkreis umgewälzt wird.

Gemäß einer weiteren Ausführungsform kann die Hauptpumpe bei einer Drehzahlumkehr des Getriebes, insbesondere bei Rückwärtsfahrt des Kraftfahrzeugs, im Umlaufbetrieb betrieben werden, d. h. deren Volumenstrom wird im Umlaufbetrieb lediglich in einem der Hauptpumpe zugeordneten Teilkreis umgewälzt. Gemäß dieser Ausführungsform ist die steuerbare Stelleinrichtung ausgeführt, die Behelfspumpe nur bei der Drehzahlumkehr des Getriebes zuzuschalten, so dass der elektrische Antriebsstrang bei Vorwärtsfahrt des Kraftfahrzeugs nur durch die Hauptpumpe mit Fluid versorgt wird, während die Behelfspumpe in Umlaufbetrieb geschaltet ist, und bei Rückwärtsfahrt nur durch die Behelfspumpe mit Fluid versorgt wird, während die Hauptpumpe in Umlauf geschaltet ist.

Vorteilhaft können die Hauptpumpe und die Behelfspumpe gemäß dieser Ausführungsform derart dimensioniert und ausgelegt sein, dass der jeweilige von Ihnen geförderte Volumenstrom speziell für den Fluidbedarf des elektrischen Antriebsstrangs bei der Vorwärtsfahrt bzw. der Rückwärtsfahrt des Kraftfahrzeugs angepasst ist. Bei der Drehzahlumkehr des Getriebes kann der Anteil des von der Behelfspumpe geförderten Volumenstroms, der zur Fluidversorgung des elektrischen Antriebsstrangs verwendet wird, z. B. speziell auf einen Geschwindigkeitsbereich bei einer Rückwärtsfahrt angepasst sein.

Gemäß einer weiteren Ausführungsform kann der Hauptpumpe ein erstes Umsteuerventil zugeordnet sein, das eine Durchflussrichtung durch die Hauptpumpe in Abhängigkeit von einer Drehrichtung des Getriebes steuert.

Alternativ oder ergänzend kann der Behelfspumpe ein zweites Umsteuerventil zugeordnet sein, das eine Durchflussrichtung durch die Behelfspumpe in Abhängigkeit von einer Drehrichtung des Getriebes steuert. Der Hauptpumpe kann ein Sperrventil zur Abkopplung der Hauptpumpe von der Versorgungsleitung bei einer Drehzahlumkehr des Getriebes, insbesondere bei Rückwärtsfahrt des Kraftfahrzeugs, zugeordnet sein.

Vorteilhaft kann durch die Hauptpumpe oder die Behelfspumpe auch bei Drehzahlumkehr weiter Fluid in den hydraulischen Kreis gefördert werden. Ferner vorteilhaft kann die Fluidförderung in den hydraulischen Kreis bei Drehzahlumkehr ausschließlich durch die Behelfspumpe erfolgen, wobei die Abkopplung der Hauptpumpe von der Versorgungsleitung durch das Sperrventil sichergestellt ist. Idealerweise ist die Stellung des jeweiligen Umschaltventils direkt an die Fahrtrichtung gekoppelt.

Die steuerbare Ventileinrichtung kann zwischen einer ersten Stellung und einer zweiten Stellung schaltbar sein. Der Volumenstrom der Behelfspumpe kann in der ersten Stellung vollständig dem elektrischen Antriebsstrang zugeführt werden und in der zweiten Stellung lediglich in einem der Behelfspumpe zugeordneten Teilkreis umgewälzt werden.

Gemäß einer ersten Variante hiervon kann die steuerbare Ventileinrichtung lediglich zwischen der ersten und zweiten Stellung schaltbar sein. Anders ausgedrückt erfolgt die Funktionsweise der Ventileinrichtung digital bzw. annähernd digital, so dass die Behelfspumpe beispielsweise entweder zu 100% zur Hauptpumpe dazu schaltet oder nur intern im Kreis fördert.

Alternativ kann die steuerbare Ventileinrichtung gemäß einer zweiten Variante zusätzlich in Zwischenstellungen schaltbar sein, in dem die Aufteilung des Volumenstroms proportional zum Ventileingangssignal ist. Hierzu kann die Ventileinrichtung z. B. als Proportional-Wegeventil ausgeführt sein. Vorteilhaft kann der Anteil des von der Behelfspumpe geförderten Volumenstroms, der beim Zuschalten der Behelfspumpe zum Volumenstrom der Hauptpumpe addiert wird, derart eingestellt werden, dass der Gesamtvolumenstrom an den Fluidbedarf des elektrischen Antriebstrangs angepasst werden kann. Eine Fluidunterversorgung des elektrischen Antriebstrangs kann ausgeschlossen und eine Überversorgung kann möglichst gering gehalten werden, sodass ein möglichst hoher Gesamtwirkungsgrad erzielt werden kann.

Gemäß einer weiteren Ausführungsform kann die Hauptpumpe und die Behelfspumpe eine ungleiche Anzahl an Verdrängerelementen und/oder zueinander phasenverschobene Ausstoßtakte aufweisen.

Vorteilhaft können die Hauptpumpe und Behelfspumpe derart kombiniert werden, dass dynamische Wechselwirkungen durch gegenseitige Anregung ausgeschlossen bzw. weitestgehend minimiert werden. Wie aus dem Stand der Technik bekannt, neigen Pumpen mit einer ganzzahligen Anzahl an Verdrängerelementen bauartbedingt zu Förderstrompulsationen und damit zur gegenseitigen Anregung. Um solche Effekte zu vermeiden, können Hauptpumpe und Behelfspumpe beispielsweise eine ungleiche Anzahl an Verdrängerelementen aufweisen, so dass ein ungleiches Schluckvolumen der Hauptpumpe und der Behelfspumpe eingestellt werden kann. Ein mögliches ungleiches Schluckvolumen kann alternativ, z. B. bei einer gleichen Anzahl an Verdrängerelementen, auch aus einem kleineren Kolbenhub oder axial schmälerem Zahnrad, z. B. bei einer Zahnradpumpe, der einen Pumpe im Vergleich zur anderen Pumpe resultieren.

Die Hauptpumpe und die Behelfspumpe können gleiche oder ungleiche Schluckvolumen aufweisen. Das Schluckvolumen der Hauptpumpe und das Schluckvolumen der Behelfspumpe stehen in einem festen Verhältnis zueinander.

Vorteilhaft ist ein beliebiges Fördervolumenverhältnis von Haupt- zu Behelfspumpe nicht nur über ein festes Übersetzungsverhältnis zwischen beiden Pumpendrehzahlen, sondern auch über ein festgelegtes Verhältnis beider Schluckvolumen einstellbar. Dies ermöglicht eine vereinfachte Abstimmung der geförderten Volumenströme beider Pumpen, um einen gewünschten Gesamtvolumenstrom entsprechend des Fluidbedarfs des elektrischen Antriebsstrangs einstellen zu können. Ferner vorteilhaft kann das Verhältnis beider Schluckvolumen derart ausgewählt sein, dass der Fluidbedarf in Abhängigkeit der Drehrichtung des Getriebes durch eine der beiden Pumpen gedeckt werden kann.

Gemäß einer weiteren Ausführungsvariante kann die Vorrichtung in einer Neutralstellung des Getriebes betreibbar sein.

Vorteilhaft kann sichergestellt werden, dass die Konstantpumpen auch bei Stillstand des Kraftfahrzeugs Fluid fördern und z. B. eine kontinuierliche Kühlung und Schmierung gewährleisten.

Gemäß einem weiteren allgemeinen Aspekt der Erfindung wird ein Kraftfahrzeug, vorzugsweise ein Nutzfahrzeug, besonders bevorzugt Nutzfahrzeug zur Güter- oder Personenbeförderung, weiter vorzugsweise mit einer zulässigen Höchstgeschwindigkeit größer 60 km/h, bereitgestellt, aufweisend die Vorrichtung zur Fluidversorgung wie hierin offenbart.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Vorrichtung zur Fluidversorgung gemäß einer ersten Ausführungsform;
- Figur 2: eine schematische Ansicht eines Ausschnitts der Vorrichtung zur Fluidversorgung gemäß einer zweiten Ausführungsform;
- Figur 3: eine schematische Ansicht eines Ausschnitts der Vorrichtung zur Fluidversorgung gemäß einer dritten Ausführungsform; und
- Figur 4: ein Diagramm des Gesamtvolumenstroms in Abhängigkeit einer Getriebedrehzahl gemäß der ersten Ausführungsform.

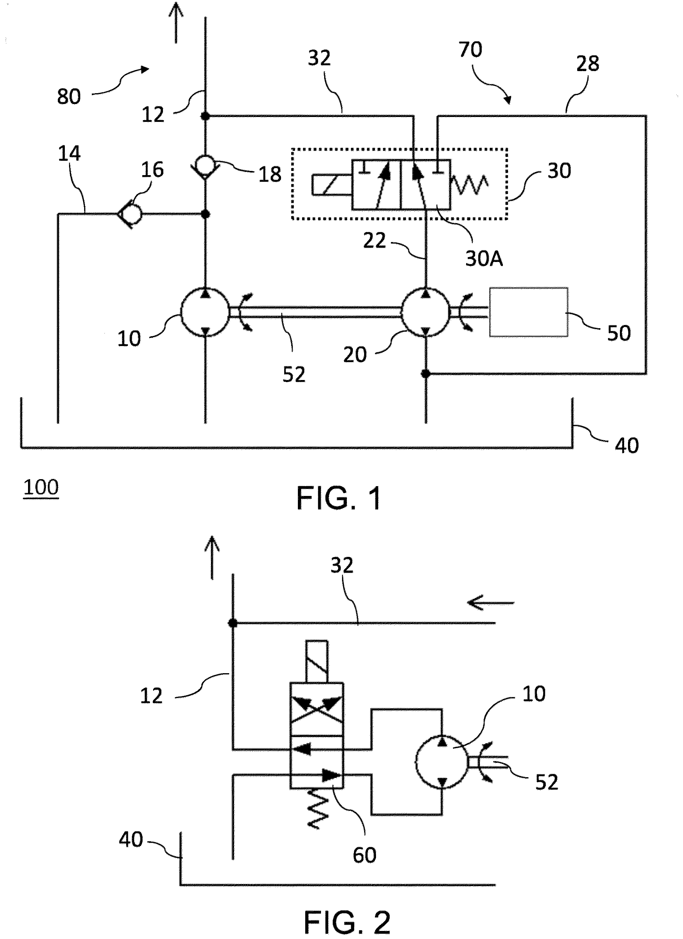

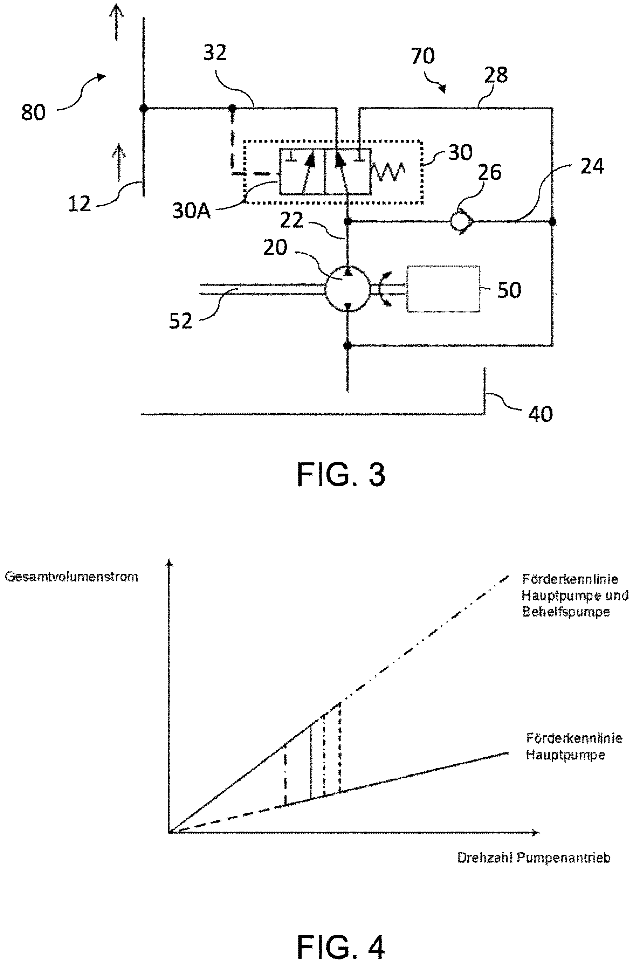

Gleiche oder funktional äquivalente Elemente sind in allen Figuren mit denselben Bezugszeichen bezeichnet und sind zum Teil nicht gesondert beschrieben. So bezeichnet beispielsweise das Bezugszeichen 30 in den Figuren 1 und 3 eine Stelleinrichtung, die je nach Ausführungsform und Variante verschieden ausgeführt sein kann.

Figur 1 zeigt eine Vorrichtung 100 zur Fluidversorgung eines elektrischen Antriebstrangs gemäß der ersten Ausführungsform.

Die Vorrichtung 100 umfasst zwei Konstantpumpen: eine als hydraulische Konstantpumpe ausgebildete Hauptpumpe 10 zur Förderung von Fluid aus einem Fluidreservoir 40 zum elektrischen Antriebsstrang, d.h. zum Fluidkreis des elektrischen Antriebstrangs, und eine als hydraulische Konstantpumpe ausgebildete Behelfspumpe 20. Die Vorrichtung 100 kann auch mehrere Behelfspumpen 20 umfassen.

Die Hauptpumpe 10 und die Behelfspumpe 20 sind von dem Getriebe 50 des elektrischen Antriebsstrangs mechanisch angetrieben, derart, dass zwischen einer Pumpendrehzahl der Hauptpumpe 10 und einer Pumpendrehzahl der Behelfspumpe 20 ein festes Übersetzungsverhältnis besteht. In der ersten Ausführungsform sind die Hauptpumpe 10 und die Behelfspumpe 20 von einer gleichen Getriebewelle 52 des Getriebes 50 angetrieben und weisen entsprechend die gleiche Drehzahl auf. Alternativ können die beiden Pumpen jeweils von einer unterschiedlichen Welle des Getriebes 50 angetrieben sein und entsprechend ein festes Übersetzungsverhältnis zwischen beiden Pumpendrehzahlen bestehen.

Die Hauptpumpe 10 ist über eine Versorgungsleitung 12 mit dem elektrischen Antriebsstrang zu dessen Fluidversorgung fluidisch verbunden. Der elektrische Antriebsstrang kann in an sich bekannter Weise ausgeführt sein, und eine motorisch und generatorisch betreibbare elektrische Maschine (Elektromotor) und ein Getriebe aufweisen, sowie einen Fluidkreis zur Fluidversorgung des elektrischen Antriebstrangs. Hiervon ist in Figur 1 nur das Getriebe 50 schematisch dargestellt. Der Fluidkreis (Ölkreis) des elektrischen Antriebsstrangs dient zur Kühlung und Schmierung des Getriebes und zur Ölversorgung des Elektromotors des elektrischen Antriebsstrangs. Der Fluidkreis wird über die Versorgungsleitung 12 mit Öl aus dem Reservoir 40 mit Hilfe der Pumpen 10, 20 versorgt.

Die Behelfspumpe 20 ist in einer Behelfsleitung 22 angeordnet, wobei die Behelfspumpe 20 mittels einer steuerbaren Stelleinrichtung 30 zur Fluidversorgung des elektrischen Antriebsstrangs wahlweise zuschaltbar ist. Dazu ist die Behelfsleitung 22 mittels der steuerbaren Stelleinrichtung 30 mit der Versorgungsleitung 12 fluidisch verbindbar. In der Ausführungsform ist die steuerbare Stelleinrichtung 30 ausgebildet, die Behelfsleitung 22 über eine Verbindungsleitung 32 mit der Versorgungsleitung 12 fluidisch zu verbinden. Ein Anteil des von der Behelfspumpe 20 geförderten Volumenstroms, der nicht zur Fluidversorgung des elektrischen Antriebsstrangs verwendet wird, kann über eine Rückführleitung 28 in das Fluidreservoir 40 und/oder stromauf zur Behelfspumpe 20 zurückgeführt werden.

Die steuerbare Stelleinrichtung 30 weist eine steuerbare Ventileinrichtung 30A auf, wobei die steuerbare Ventileinrichtung 30A auf verschiedene Weise ausgebildet sein kann. In Figur 1 ist die Ventileinrichtung 30A als elektrisch angesteuertes Wegeventil, insbesondere ein 3/2-Wegeventil ausgeführt. Das Wegeventil 30A kann von einem Fahrzeugrechner (nicht dargestellt) zweckmäßig angesteuert werden, wie vorstehend bereits beschrieben wurde. Der Fahrzeugrechner kann das Wegeventil 30A in Figur 1 in Abhängigkeit von z. B. einem sensorisch erfassten oder durch einen Fahrzeugrechner bereitgestellten Messsignal auf Basis von physikalischen Kräften oder Druck im hydraulischen Kreis 80 der Fluidversorgung ansteuern. Darüber hinaus ist es auch denkbar, dass die steuerbare Ventileinrichtung 30A ein ansteuerbares Wegeventil, vorzugsweise ein Proportional-Wegeventil, aufweist, welches anderweitig mechanisch, hydraulisch, pneumatisch oder elektrisch ansteuerbar ist. Beispielsweise zeigt Figur 3 eine Ausführungsform mit hydraulisch gesteuerten Wegeventil 30A, das ausgebildet ist, das wahlweise Zuschalten der Behelfspumpe selbsttätig als Funktion von einem Druck im hydraulischen Kreis 80 der Fluidversorgung zu steuern.

Die steuerbare Ventileinrichtung 30A kann zwischen einer ersten Stellung und einer zweiten Stellung schaltbar sein, wobei der Volumenstrom der Behelfspumpe 20 in der ersten Stellung vollständig dem elektrischen Antriebsstrang zugeführt wird und in der zweiten Stellung lediglich in einem der Behelfspumpe 20 zugeordneten Teilkreis 70 umgewälzt wird. Der Teilkreis 70 umfasst die Behelfsleitung 22 und die Rückführleitung 28. Die steuerbare Ventileinrichtung 30A kann lediglich zwischen der ersten und zweiten Stellung schaltbar sein, oder zusätzlich in Zwischenstellungen schaltbar sein, in dem die Aufteilung des Volumenstroms proportional zum Ventileingangssignal ist. Somit ist die Ventileinrichtung 30A derart schaltbar, dass der Gesamtvolumenstrom an den Fluidbedarf des elektrischen Antriebstrangs angepasst werden kann.

Ein Rückflussverhinderer 18, vorzugsweise ein Rückschlagventil, kann stromab der Hauptpumpe 10 zur Verhinderung eines Fluidrückflusses in Richtung der Hauptpumpe 10 angeordnet sein.

Zudem kann eine erste Nachsaugleitung 14 von der Versorgungsleitung 12 stromab der Hauptpumpe 10 abzweigen und im Fluidreservoir 40 münden, wobei in der ersten Nachsaugleitung 14 ein erstes Nachsaugventil 16, vorzugsweise ein Rückschlagventil, zur Verhinderung eines Unterdruckes an der Hauptpumpe 10 angeordnet sein kann.

Die Funktion der Vorrichtung 100 hängt von der Drehrichtung des Getriebes 50 bzw. der Getriebewelle 52 ab, wodurch die Förderrichtungen der Hauptpumpe 10 und der Behelfspumpe 20 bestimmt werden. Das Getriebe 50 hat grundsätzlich zwei Drehrichtungen, wobei eine erste Drehrichtung einem Vorwärtsfahrbetrieb des Kraftfahrzeugs entspricht und eine zweite Drehrichtung einem Rückwärtsfahrbetrieb des Kraftfahrzeugs entsprechen kann.

Die erste Drehrichtung ist die Drehrichtung der Ausführungsform, bei der beide Pumpen 10, 20 Fluid aus dem Fluidreservoir 40 ansaugen und den jeweiligen Volumenstrom in Richtung des elektrischen Antriebstrangs, d. h. die Hauptpumpe 10 in die Versorgungsleitung 12 und die Behelfspumpe 20 in die Behelfsleitung 22 in Richtung der steuerbaren Stelleinrichtung 30, fördern. Bei dieser Drehrichtung erfolgt die Fluidversorgung wie zuvor beschrieben, d. h. beim Zuschalten der Behelfspumpe 20 addieren sich die Volumenströme der Hauptpumpe 10 und Behelfspumpe 20 zur Versorgung des elektrischen Antriebsstrangs und im nicht-zugeschalteten Zustand der Behelfspumpe 20 wird deren Volumenstrom lediglich in einem der Behelfspumpe 20 zugeordneten Teilkreis 70 umgewälzt.

Die Volumenströme der Hauptpumpe 10 und Behelfspumpe 20 hängen dabei von der Drehzahl des Getriebes 50 ab, wobei der Anteil des von der Behelfspumpe 20 geförderten und dem elektrischen Antriebsstrang zugeführten Volumenstroms durch die Stellung der steuerbaren Ventileinrichtung 30A geregelt wird.

Dreht sich das Getriebe 50 in die zweite Drehrichtung, so kann der Hauptpumpe 10 über die erste Nachsaugleitung 14 Fluid aus dem Fluidreservoir 40 zugeführt werden. In der ersten Ausführungsform wird das Fluid in der zweiten Drehrichtung nicht in die Versorgungsleitung 12 gefördert, sondern zurück in das Fluidreservoir 40. Die Hauptpumpe 10 wird somit im Umlaufbetrieb betrieben.

Wie in Figur 2 gezeigt, kann der Hauptpumpe 10 alternativ ein erstes Umsteuerventil 60 zugeordnet sein, das eine Durchflussrichtung durch die Hauptpumpe 10 in Abhängigkeit von einer Drehrichtung des Getriebes 50 steuert. Die Durchflussrichtung kann derart gesteuert sein, dass der Volumenstrom der Hauptpumpe 10 immer zur Versorgung des elektrischen Antriebsstrangs in die Versorgungsleitung 12 gefördert wird, und damit die Fluidversorgung unabhängig von der Drehrichtung gewährleistet werden kann. Die Stelleinrichtung 30, die Behelfspumpe 20 und deren zugeordneter Teilkreis 70 sind in Figur 2 nicht dargestellt, können jedoch wie in Figur 1 ausgeführt sein.

Wie in Figur 3 gezeigt, kann eine zweite Nachsaugleitung 24 von der Behelfsleitung 22 stromab der Behelfspumpe 20 abzweigen und im Fluidreservoir 40 oder in der Behelfsleitung 22 stromauf der Behelfspumpe 20 münden, wobei in der zweiten Nachsaugleitung 24 ein zweites Nachsaugventil 26, vorzugsweise ein Rückschlagventil, zur Verhinderung eines Unterdruckes an der Behelfspumpe 20 angeordnet sein kann.

Mittels der zweiten Nachsaugleitung 24 kann auch die Behelfspumpe 20 im Umlaufbetrieb betrieben werden, falls sich das Getriebe 50 in die zweite Drehrichtung dreht. In dem Fall kann der Behelfspumpe 20 über die zweite Nachsaugleitung 24 Fluid aus dem Fluidreservoir 40 zugeführt werden.

Alternativ können die Hauptpumpe 10 und die Behelfspumpe 20 so ausgebildet sein, dass dem elektrischen Antriebstrang bei beiden Drehrichtungen des Getriebes 50 jeweils nur der Volumenstrom einer der beiden Pumpen zugeführt wird. Beispielsweise kann die Hauptpumpe 10 bei einer Drehzahlumkehr des Getriebes 50, insbesondere wenn sich das Getriebe 50 bei Rückwärtsfahrt des Kraftfahrzeugs in die zweite Drehrichtung dreht, im Umlaufbetrieb betrieben werden, und die Fluidversorgung für den elektrischen Antriebstrang ausschließlich durch die Behelfspumpe 20 gefördert werden. Dazu kann die steuerbare Stelleinrichtung 30 ausgeführt sein, die Behelfspumpe 20 nur bei der Drehzahlumkehr des Getriebes 50 zuzuschalten. Der elektrische Antriebsstrang kann so bei Vorwärtsfahrt des Kraftfahrzeugs nur durch die Hauptpumpe 10 mit Fluid versorgt werden, während die Behelfspumpe 20 in den Umlaufbetrieb geschaltet ist, und bei Rückwärtsfahrt nur durch die Behelfspumpe 20 mit Fluid versorgt werden, während die Hauptpumpe 10 in den Umlaufbetrieb geschaltet ist.

Figur 4 veranschaulicht eine mögliche Zusammensetzung des Gesamtvolumenstroms für eine Drehrichtung des Getriebes 50, vorzugsweise für die erste Drehrichtung im Vorwärtsfahrbetrieb des Kraftfahrzeugs, und Summenbetrieb für die erste Ausführungsform. Das Diagramm zeigt den Gesamtvolumenstrom, der sich aus dem Volumenstrom der Hauptpumpe 10 und ggf. der Behelfspumpe 20 zusammensetzt, in Abhängigkeit der Drehzahl des Getriebes 50. Erkennbar ist zunächst der lineare Zusammenhang zwischen den Volumenströmen der beiden Konstantpumpen und der Drehzahl.

Gezeigt ist die gemeinsame Förderung von Haupt- und Behelfspumpe im unteren Drehzahlbereich. Somit wird optional auch bei geringen Drehzahlen ein hoher Gesamtvolumenstrom gewährleistet. Ab einer bestimmten Pumpendrehzahl wird die Ventileinrichtung 30A z. B. als Funktion einer oder mehrerer Betriebsparameter angesteuert und die Behelfspumpe 20 vom hydraulische Kreis 80 der Fluidversorgung abgetrennt. Entsprechend fördert nur noch die Hauptpumpe 10 in den hydraulischen Kreis 80. In diesem Beispiel schaltet sich die Behelfspumpe 20 entweder zu 100% zur Hauptpumpe 10 dazu oder fördert nur intern im Teilkreis 70. Alternativ sind auch Zwischenstellungen der Ventileinrichtung 30A denkbar, d. h. die Aufteilung des Volumenstroms der Behelfspumpe 20 kann proportional zum Ventileingangssignal sein. Damit kann die Behelfspumpe 20 auch beliebige Volumenströme zwischen Null und einer Maximalfördermenge zur Hauptpumpe 10 beisteuern.

### Bezugszeichenliste

- 10: Hauptpumpe
- 12: Versorgungsleitung
- 14: Erste Nachsaugleitung
- 16: Erstes Nachsaugventil
- 18: Rückflussverhinderer
- 20: Behelfspumpe
- 22: Behelfsleitung
- 24: Zweite Nachsaugleitung
- 26: Zweites Nachsaugventil
- 28: Rückführleitung
- 30: Stelleinrichtung
- 30A: Ventileinrichtung
- 32: Verbindungsleitung zw. Behelfs- und Versorgungsleitung
- 40: Fluidreservoir
- 50: Getriebe
- 52: Getriebewelle
- 60: Erstes Umsteuerventil
- 70: Teilkreis
- 80: Hydraulischer Kreis der Fluidversorgung
- 100: Fluidversorgungssystem

## Patentansprüche

1. Vorrichtung (100) zur Fluidversorgung eines elektrischen Antriebstrangs, zur Kühlung und Schmierung eines Getriebes und vorzugsweise zur Ölversorgung eines Elektromotors des elektrischen Antriebsstrangs, für ein Kraftfahrzeug, umfassend
- eine Hauptpumpe (10) zur Förderung von Fluid aus einem Fluidreservoir (40) zum elektrischen Antriebsstrang; und
- mindestens eine Behelfspumpe (20), wobei die Behelfspumpe (20) mittels einer steuerbaren Stelleinrichtung (30) zur Fluidversorgung des elektrischen Antriebsstrangs wahlweise zuschaltbar ist;
**dadurch gekennzeichnet, dass**,
die Hauptpumpe (10) und die Behelfspumpe (20) als hydraulische Konstantpumpen ausgebildet sind; und die Hauptpumpe (10) und die Behelfspumpe (20) von dem Getriebe (50) des elektrischen Antriebsstrangs mechanisch angetrieben sind, derart, dass zwischen einer Pumpendrehzahl der Hauptpumpe (10) und einer Pumpendrehzahl der Behelfspumpe (20) ein festes Übersetzungsverhältnis besteht.

2. Vorrichtung (100) zur Fluidversorgung nach Anspruch 1, wobei die Hauptpumpe (10) über eine Versorgungsleitung (12) mit dem elektrischen Antriebsstrang fluidisch verbunden ist und die Behelfspumpe (20) in einer Behelfsleitung (22) angeordnet ist, wobei zum Zuschalten der Behelfspumpe (20) zur Fluidversorgung des elektrischen Antriebsstrangs die Behelfsleitung (22) mittels der steuerbaren Stelleinrichtung (30) mit der Versorgungsleitung (12) fluidisch verbindbar ist.

3. Vorrichtung (100) zur Fluidversorgung nach Anspruch 1 oder 2, wobei die steuerbare Stelleinrichtung (30) eine steuerbare Ventileinrichtung (30A), vorzugsweise ein mechanisch, hydraulisch, pneumatisch oder elektrisch ansteuerbares Wegeventil, vorzugsweise Proportional-Wegeventil, aufweist.

4. Vorrichtung (100) zur Fluidversorgung nach Anspruch 3, wobei die steuerbare Ventileinrichtung (30A) ein hydraulisch gesteuertes Wegeventil aufweist, das ausgebildet ist, das wahlweise Zuschalten der Behelfspumpe selbsttätig als Funktion von mindestens einer Zustandsgröße im hydraulischen Kreis (80) der Fluidversorgung zu steuern.

5. Vorrichtung (100) zur Fluidversorgung nach Anspruch 3, wobei die steuerbare Ventileinrichtung (30A) eine elektrisch ansteuerbare Ventileinrichtung, vorzugsweise ein elektrisch ansteuerbares Wegeventil, aufweist und wobei die Vorrichtung (100) ausgebildet ist, die Ventileinrichtung in Abhängigkeit von zumindest einer der folgenden Größen elektrisch anzusteuern: einem Datenbussignal, beispielsweise einem CAN-Signal, einem sensorisch erfassten oder durch einen Fahrzeugrechner bereitgestellten Messsignal, einer Gangstufe des Getriebes, und auf Basis von physikalischen Kräften oder Druck im hydraulischen Kreis (80) der Fluidversorgung.

6. Vorrichtung (100) zur Fluidversorgung nach einem der vorhergehenden Ansprüche, wobei die Hauptpumpe (10) und die Behelfspumpe (20)
a) von der gleichen Getriebewelle (52) des Getriebes (50) angetrieben sind und entsprechend die gleiche Drehzahl aufweisen, oder
b) jeweils von einer unterschiedlichen Welle des Getriebes (50) angetrieben sind und entsprechend eine festes Übersetzungsverhältnis zwischen beiden Pumpendrehzahlen besteht.

7. Vorrichtung (100) zur Fluidversorgung nach einem der vorhergehenden Ansprüche, wobei die Stelleinrichtung (30) ausgebildet ist, einen Anteil des von der Behelfspumpe (20) geförderten Volumenstroms, der nicht zur Fluidversorgung des elektrischen Antriebsstrangs verwendet wird, über eine Rückführleitung (28) in das Fluidreservoir (40) und/oder stromauf zur Behelfspumpe (20) zurückzuführen.

8. Vorrichtung (100) zur Fluidversorgung nach einem der vorhergehenden Ansprüche, ferner aufweisend einen stromab der Hauptpumpe (10) angeordneten Rückflussverhinderer (18), vorzugsweise ein Rückschlagventil, zur Verhinderung eines Fluidrückflusses in Richtung der Hauptpumpe (10), vorzugsweise bei Drehzahlumkehr des Getriebes, beispielsweise bei Rückwärtsfahrt.

9. Vorrichtung (100) zur Fluidversorgung nach einem der Ansprüche 2 bis 8, wobei von der Versorgungsleitung (12) stromab der Hauptpumpe (10) eine erste Nachsaugleitung (14) abzweigt und im Fluidreservoir (40) mündet, wobei
a) in der ersten Nachsaugleitung (14) ein erstes Nachsaugventil (16), vorzugsweise Rückschlagventil, angeordnet ist zur Verhinderung eines Unterdruckes an der Hauptpumpe (10), und
b) der Hauptpumpe (10) bei einer Drehrichtung des Getriebes (50), die einem Rückwärtsfahrbetriebs des Kraftfahrzeugs entspricht, Fluid über die erste Nachsaugleitung (14) zugeführt wird.

10. Vorrichtung (100) zur Fluidversorgung nach einem der Ansprüche 2 bis 9, wobei von der Behelfsleitung (22) stromab der Behelfspumpe (20) eine zweite Nachsaugleitung (24) abzweigt und im Fluidreservoir (40) oder in der Behelfsleitung (22) stromauf der Behelfspumpe (20) mündet, wobei
a) in der zweiten Nachsaugleitung (24) ein zweites Nachsaugventil (26), vorzugsweise Rückschlagventil, angeordnet ist zur Verhinderung eines Unterdruckes an der Behelfspumpe (20), und
b) der Behelfspumpe (20) bei einer Drehrichtung des Getriebes (50), die einem Rückwärtsfahrbetrieb des Kraftfahrzeugs entspricht, Fluid über die zweite Nachsaugleitung (24) zugeführt wird.

11. Vorrichtung (100) zur Fluidversorgung nach einem der vorherigen Ansprüche, wobei die Vorrichtung (100) derart ausgeführt ist, dass sich beim Zuschalten der Behelfspumpe (20) die Volumenströme von Hauptpumpe (10) und Behelfspumpe (20) zur Versorgung des elektrischen Antriebsstrangs addieren und im nicht-zugeschalteten Zustand der Behelfspumpe (20) deren Volumenstrom lediglich in einem der Behelfspumpe (20) zugeordneten Teilkreis (70) umgewälzt wird.

12. Vorrichtung (100) zur Fluidversorgung nach einem der Ansprüche 1 bis 10, wobei die Hauptpumpe (10) bei einer Drehzahlumkehr des Getriebes (50), insbesondere bei Rückwärtsfahrt des Kraftfahrzeugs, im Umlaufbetrieb betrieben wird, und die steuerbare Stelleinrichtung (30) ausgeführt ist, die Behelfspumpe (20) nur bei der Drehzahlumkehr des Getriebes zuzuschalten, so dass der elektrische Antriebsstrang
- bei Vorwärtsfahrt des Kraftfahrzeugs nur durch die Hauptpumpe (10) mit Fluid versorgt wird, während die Behelfspumpe (20) in Umlaufbetrieb geschaltet ist und
- bei Rückwärtsfahrt nur durch die Behelfspumpe (20) mit Fluid versorgt wird, während die Hauptpumpe (10) in Umlauf geschaltet ist.

13. Vorrichtung (100) zur Fluidversorgung nach einem der Ansprüche 2 bis 8 und 11, wobei
a) der Hauptpumpe (10) ein erstes Umsteuerventil (60) zugeordnet ist, das eine Durchflussrichtung durch die Hauptpumpe (10) in Abhängigkeit von einer Drehrichtung des Getriebes (50) steuert, und/oder
b) der Behelfspumpe (20) ein zweites Umsteuerventil zugeordnet ist, das eine Durchflussrichtung durch die Behelfspumpe (20) in Abhängigkeit von einer Drehrichtung des Getriebes (50) steuert, wobei der Hauptpumpe (10) ein Sperrventil zur Abkopplung der Hauptpumpe (12) von der Versorgungsleitung (12) bei einer Drehzahlumkehr des Getriebes (50), insbesondere bei Rückwärtsfahrt des Kraftfahrzeugs, zugeordnet ist.

14. Vorrichtung (100) zur Fluidversorgung nach einem der Ansprüche 3 bis 13, wobei die steuerbare Ventileinrichtung (30A) zwischen einer ersten Stellung und einer zweiten Stellung schaltbar ist, wobei der Volumenstrom der Behelfspumpe (20) in der ersten Stellung vollständig dem elektrischen Antriebsstrang zugeführt wird und in der zweiten Stellung lediglich in einem der Behelfspumpe (20) zugeordneten Teilkreis (70) umgewälzt wird, wobei die steuerbare Ventileinrichtung (30A)
a) lediglich zwischen der ersten und zweiten Stellung schaltbar ist, oder
b) zusätzlich in Zwischenstellungen schaltbar ist, in dem die Aufteilung des Volumenstroms proportional zum Ventileingangssignal ist.

15. Vorrichtung (100) zur Fluidversorgung nach einem der vorhergehenden Ansprüche, wobei
a) die Hauptpumpe (10) und die Behelfspumpe (20) eine ungleiche Anzahl an Verdrängerelementen und/oder zueinander phasenverschobene Ausstoßtakte aufweisen, und/oder
b) die Hauptpumpe (10) und die Behelfspumpe (20) gleiche oder ungleiche Schluckvolumen aufweisen.

16. Vorrichtung (100) zur Fluidversorgung nach einem der vorhergehenden Ansprüche, wobei die Vorrichtung (100) in einer Neutralstellung des Getriebes (50) betreibbar ist.

17. Kraftfahrzeug, vorzugsweise Nutzfahrzeug, besonders bevorzugt Nutzfahrzeug zur Güter- oder Personenbeförderung mit einer zulässigen Höchstgeschwindigkeit größer 60 km/h, aufweisend eine Vorrichtung (100) zur Fluidversorgung nach einem der vorhergehenden Ansprüche.

## Claims

1. Device (100) for fluid supply to an electric drive train, for cooling and lubricating a transmission and preferably for supplying oil to an electric motor of the electric drive train, for a motor vehicle, comprising
- a main pump (10) for delivering fluid from a fluid reservoir (40) to the electric drive train; and
- at least one auxiliary pump (20), the auxiliary pump (20) being selectively connectable by means of a controllable actuating device (30) for supplying fluid to the electric drive train;
**characterised in that**
the main pump (10) and the auxiliary pump (20) are designed as hydraulic fixed displacement pumps; and the main pump (10) and the auxiliary pump (20) are mechanically driven by the transmission (50) of the electric drive train in such a way that there is a fixed transmission ratio between a pump speed of the main pump (10) and a pump speed of the auxiliary pump (20).

2. Device (100) for fluid supply according to claim 1, wherein the main pump (10) is fluidically connected to the electric drive train via a supply line (12) and the auxiliary pump (20) is arranged in an auxiliary line (22), wherein the auxiliary line (22) can be fluidically connected to the supply line (12) by means of the controllable actuating device (30) in order to switch on the auxiliary pump (20) for fluid supply to the electric drive train.

3. Device (100) for fluid supply according to claim 1 or 2, wherein the controllable actuating device (30) comprises a controllable valve device (30A), preferably a mechanically, hydraulically, pneumatically or electrically controllable directional control valve, preferably a proportional directional control valve.

4. Device (100) for fluid supply according to claim 3, wherein the controllable valve device (30A) has a hydraulically controlled directional control valve which is designed to control the selective activation of the auxiliary pump automatically as a function of at least one state variable in the hydraulic circuit (80) of the fluid supply .

5. Device (100) for fluid supply according to claim 3, wherein the controllable valve device (30A) has an electrically controllable valve device, preferably an electrically controllable directional control valve, and wherein the device (100) is designed to electrically control the valve device as a function of at least one of the following variables: a data bus signal, for example a CAN signal, a measurement signal detected by a sensor or provided by a vehicle computer, a gear stage of the transmission, and on the basis of physical forces or pressure in the hydraulic circuit (80) of the fluid supply.

6. Device (100) for fluid supply according to one of the preceding claims, wherein the main pump (10) and the auxiliary pump (20)
a) are driven by the same gear shaft (52) of the transmission (50) and accordingly have the same speed, or
b) are each driven by a different shaft of the transmission (50) and there is a corresponding fixed transmission ratio between the two pump speeds.

7. Device (100) for fluid supply according to one of the preceding claims, wherein the adjusting device (30) is designed to return a portion of the volume flow conveyed by the auxiliary pump (20), which is not used for fluid supply to the electric drive train, via a return line (28) into the fluid reservoir (40) and/or upstream to the auxiliary pump (20).

8. Device (100) for fluid supply according to one of the preceding claims, further comprising a backflow preventer (18) arranged downstream of the main pump (10), preferably a non-return valve, for preventing fluid backflow in the direction of the main pump (10), preferably when the speed of the transmission is reversed, for example when travelling in reverse.

9. Device (100) for fluid supply according to one of claims 2 to 8, wherein a first post-suction line (14) branches off from the supply line (12) downstream of the main pump (10) and opens into the fluid reservoir (40), wherein
a) a first post-suction valve (16), preferably a non-return valve, is arranged in the first post-suction line (14) to prevent a vacuum at the main pump (10), and
b) fluid is supplied to the main pump (10) via the first suction line (14) when the direction of rotation of the transmission (50) corresponds to a reverse driving mode of the motor vehicle.

10. Device (100) for fluid supply according to one of claims 2 to 9, wherein a second suction line (24) branches off from the auxiliary line (22) downstream of the auxiliary pump (20) and opens in the fluid reservoir (40) or in the auxiliary line (22) upstream of the auxiliary pump (20), wherein
a) a second post-suction valve (26), preferably a non-return valve, is arranged in the second post-suction line (24) to prevent a vacuum at the auxiliary pump (20), and
b) fluid is supplied to the auxiliary pump (20) via the second suction line (24) when the direction of rotation of the transmission (50) corresponds to reverse operation of the motor vehicle.

11. Device (100) for fluid supply according to one of the preceding claims, wherein the device (100) is designed such that when the auxiliary pump (20) is switched on, the volume flows of the main pump (10) and auxiliary pump (20) are added together to supply the electric drive train and, when the auxiliary pump (20) is not switched on, its volume flow is only circulated in a subcircuit (70) assigned to the auxiliary pump (20).

12. Device (100) for fluid supply according to one of claims 1 to 10, wherein the main pump (10) is operated in circulation mode when the speed of the transmission (50) is reversed, in particular when the motor vehicle is travelling in reverse, and the controllable actuating device (30) is designed to switch on the auxiliary pump (20) only when the speed of the transmission is reversed, so that the electric drive train is switched on only when the speed of the transmission is reversed.
- when the motor vehicle is travelling forwards, fluid is supplied only by the main pump (10), while the auxiliary pump (20) is switched to circulation mode, and
- is only supplied with fluid by the auxiliary pump (20) when travelling in reverse, while the main pump (10) is switched into circulation.

13. Device (100) for fluid supply according to one of claims 2 to 8 and 11, wherein
a) the main pump (10) is assigned a first reversing valve (60) which controls a flow direction through the main pump (10) as a function of a direction of rotation of the transmission (50), and/or
b) a second reversing valve is assigned to the auxiliary pump (20), which controls a flow direction through the auxiliary pump (20) as a function of a direction of rotation of the transmission (50), wherein the main pump (10) is assigned a shut-off valve for decoupling the main pump (12) from the supply line (12) in the event of a speed reversal of the transmission (50), in particular when the motor vehicle is travelling in reverse.

14. Device (100) for fluid supply according to one of claims 3 to 13, wherein the controllable valve device (30A) is switchable between a first position and a second position, wherein the volume flow of the auxiliary pump (20) is completely supplied to the electric drive train in the first position and is only circulated in a subcircuit (70) associated with the auxiliary pump (20) in the second position, wherein the controllable valve device (30A) can be switched between a first position and a second position.
a) can only be switched between the first and second position, or
b) can additionally be switched to intermediate positions in which the division of the volume flow is proportional to the valve input signal.

15. Device (100) for fluid supply according to one of the preceding claims, wherein
a) the main pump (10) and the auxiliary pump (20) have an unequal number of displacement elements and/or discharge cycles which are out of phase with one another, and/or
b) the main pump (10) and the auxiliary pump (20) have equal or unequal displacement volumes.

16. Device (100) for fluid supply according to one of the preceding claims, wherein the device (100) is operable in a neutral position of the transmission (50).

17. Motor vehicle, preferably a commercial vehicle, particularly preferably a commercial vehicle for transporting goods or passengers with a maximum authorised speed greater than 60 km/h, having a device (100) for supplying fluid according to one of the preceding claims.

## Revendications

1. Dispositif (100) d'alimentation en fluide d'une chaîne cinématique électrique, servant au refroidissement et à la lubrification d'une transmission et de préférence servant à l'alimentation en huile d'un moteur électrique de la chaîne cinématique électrique, pour un véhicule automobile, comprenant
- une pompe principale (10) servant au refoulement de fluide à partir d'un réservoir de fluide (40) jusqu'à une chaîne cinématique électrique ; et
- au moins une pompe auxiliaire (20), la pompe auxiliaire (20) pouvant être connectée sélectivement au moyen d'un dispositif de réglage (30) pouvant être commandé pour l'alimentation en fluide de la chaîne cinématique électrique ;
**caractérisé en ce que**
la pompe principale (10) et la pompe auxiliaire (20) sont réalisées sous forme de pompes hydrauliques à cylindrée constante ; et la pompe principale (10) et la pompe auxiliaire (20) sont entraînées mécaniquement par la transmission (50) de la chaîne cinématique électrique, de telle sorte qu'il existe un rapport de transmission fixe entre un régime de la pompe principale (10) et un régime de la pompe auxiliaire (20).

2. Dispositif (100) d'alimentation en fluide selon la revendication 1, la pompe principale (10) étant reliée fluidiquement à la chaîne cinématique électrique par le biais d'une conduite d'alimentation (12) et la pompe auxiliaire (20) étant disposée dans une conduite auxiliaire (22), la conduite auxiliaire (22) pouvant être reliée fluidiquement à la conduite d'alimentation (12) au moyen du dispositif de réglage (30) pouvant être commandé pour la connexion de la pompe auxiliaire (20) pour l'alimentation en fluide de la chaîne cinématique électrique.

3. Dispositif (100) d'alimentation en fluide selon la revendication 1 ou 2, le dispositif de réglage (30) pouvant être commandé présentant un dispositif soupape (30A) pouvant être commandé, de préférence un distributeur, de préférence distributeur proportionnel, pouvant être commandé mécaniquement, hydrauliquement, pneumatiquement ou électriquement.

4. Dispositif (100) d'alimentation en fluide selon la revendication 3, le dispositif soupape (30A) pouvant être commandé présentant un distributeur commandé hydrauliquement, qui est réalisé pour commander automatiquement la connexion sélective de la pompe auxiliaire en fonction d'au moins une grandeur d'état dans le circuit hydraulique (80) de l'alimentation en fluide.

5. Dispositif (100) d'alimentation en fluide selon la revendication 3, le dispositif soupape (30A) pouvant être commandé présentant un dispositif soupape pouvant être commandé électriquement, de préférence un distributeur pouvant être commandé électriquement, et le dispositif (100) étant réalisé pour commander électriquement le dispositif soupape en fonction d'au moins l'une des grandeurs suivantes : un signal de bus de données, par exemple signal CAN, un signal de mesure détecté par capteur ou produit par un ordinateur de véhicule, un rapport de vitesse de la transmission, et sur la base de forces physiques ou de la pression dans le circuit hydraulique (80) de l'alimentation en fluide.

6. Dispositif (100) d'alimentation en fluide selon l'une des revendications précédentes, la pompe principale (10) et la pompe auxiliaire (20)
a) étant entraînées par le même arbre de transmission (52) de la transmission (50) et présentant en conséquence le même régime, ou
b) étant entraînées respectivement par un arbre différent de la transmission (50) et en conséquence un rapport de transmission fixe entre les deux régimes de pompe existant.

7. Dispositif (100) d'alimentation en fluide selon l'une des revendications précédentes, le dispositif de réglage (30) étant réalisé pour renvoyer une partie du débit volumique refoulé par la pompe auxiliaire (20), lequel débit volumique n'est pas utilisé pour l'alimentation en fluide de la chaîne cinématique électrique, dans le réservoir de fluide (40) et/ou en amont de la pompe auxiliaire (20) par le biais d'une conduite de retour (28).

8. Dispositif (100) d'alimentation en fluide selon l'une des revendications précédentes, présentant en outre un dispositif anti-retour (18) disposé en aval de la pompe principale (10), de préférence une soupape anti-retour, servant à empêcher un retour de fluide en direction de la pompe principale (10), de préférence en cas d'inversion de régime de la transmission, par exemple en cas de marche arrière.

9. Dispositif (100) d'alimentation en fluide selon l'une des revendications 2 à 8, une première conduite de réaspiration (14) bifurquant à partir de la conduite d'alimentation (12) en aval de la pompe principale (10) et débouchant dans le réservoir de fluide (40),
a) une première soupape de réaspiration (16), de préférence une soupape anti-retour, étant disposée dans la première conduite de réaspiration (14), pour empêcher une dépression au niveau de la pompe principale (10), et
b) du fluide étant acheminé à la pompe principale (10) par le biais de la première conduite de réaspiration (14) dans le cas d'un sens de rotation de la transmission (50) qui correspond à un mode de marche arrière du véhicule automobile.

10. Dispositif (100) d'alimentation en fluide selon l'une des revendications 2 à 9, une deuxième conduite de réaspiration (24) bifurquant à partir de la conduite auxiliaire (22) en aval de la pompe auxiliaire (20) et débouchant dans le réservoir de fluide (40) ou dans la conduite auxiliaire (22) en amont de la pompe auxiliaire (20),
a) une deuxième soupape de réaspiration (26), de préférence une soupape anti-retour, étant disposée dans la deuxième conduite de réaspiration (24) pour empêcher une dépression au niveau de la pompe auxiliaire (20), et
b) du fluide étant acheminé, par le biais de la deuxième conduite de réaspiration (24), à la pompe auxiliaire (20) dans le cas d'un sens de rotation de la transmission (50) qui correspond à un mode de marche arrière du véhicule automobile.

11. Dispositif (100) d'alimentation fluide selon l'une des revendications précédentes, le dispositif (100) étant conçu de telle sorte qu'en cas de connexion de la pompe auxiliaire (20), les débits volumiques de la pompe principale (10) et de la pompe auxiliaire (20) sont ajoutés pour l'alimentation de la chaîne cinématique électrique et, dans l'état non connecté de la pompe auxiliaire (20), leur débit volumique est amené à recirculer seulement dans un circuit partiel (70) associé à la pompe auxiliaire (20).

12. Dispositif (100) d'alimentation en fluide selon l'une des revendications 1 à 10, la pompe principale (10) fonctionnant en mode de recirculation dans le cas d'une inversion de régime de la transmission (50), en particulier en cas de marche arrière du véhicule automobile, et le dispositif de réglage (30) pouvant être commandé étant conçu pour ne connecter la pompe auxiliaire (20) qu'en cas d'inversion de régime de la transmission, de sorte que la chaîne cinématique électrique
- ne soit alimentée en fluide que par la pompe principale (10) en cas de marche avant du véhicule automobile, pendant que la pompe auxiliaire (20) est commutée en mode de recirculation et
- ne soit alimentée en fluide que par la pompe auxiliaire (20) en cas de marche arrière, pendant que la pompe principale (10) est commutée en recirculation.

13. Dispositif (100) d'alimentation en fluide selon l'une des revendications 2 à 8 et 11,
a) une première soupape d'inversion (60) étant associée à la pompe principale (10), laquelle première soupape d'inversion commande un sens d'écoulement à travers la pompe principale (10) en fonction d'un sens de rotation de la transmission (50), et/ou
b) une deuxième soupape d'inversion étant associée à la pompe auxiliaire (20), laquelle deuxième soupape d'inversion commande un sens d'écoulement à travers la pompe auxiliaire (20) en fonction d'un sens de rotation de la transmission (50), une soupape d'arrêt servant au désaccouplement de la pompe principale (12) de la conduite d'alimentation (12) en cas d'inversion de régime de la transmission (50), en particulier en cas de marche arrière du véhicule automobile, étant associée à la pompe principale (10).

14. Dispositif (100) d'alimentation en fluide selon l'une des revendications 3 à 13, le dispositif soupape (30A) pouvant être commandé pouvant être commuté entre une première position et une deuxième position, le débit volumique de la pompe auxiliaire (20) étant acheminé complètement à la chaîne cinématique électrique dans la première position et étant amené à recirculer seulement dans un circuit partiel (70) associé à la pompe auxiliaire (20) dans la deuxième position, le dispositif soupape (30A) pouvant être commandé
a) pouvant être commuté seulement entre la première et la deuxième position, ou
b) pouvant être commuté en plus dans des positions intermédiaires dans lesquelles la distribution du débit volumique est proportionnelle au signal d'entrée de soupape.

15. Dispositif (100) d'alimentation en fluide selon l'une des revendications précédentes,
a) la pompe principale (10) et la pompe auxiliaire (20) présentant un nombre différent d'éléments de refoulement et/ou des temps d'éjection déphasés les uns par rapport aux autres, et/ou
b) la pompe principale (10) et la pompe auxiliaire (20) présentant des volumes de dimensionnement identiques ou différents.

16. Dispositif (100) d'alimentation en fluide selon l'une des revendications précédentes, le dispositif (100) pouvant fonctionner dans une position neutre de la transmission (50).

17. Véhicule automobile, de préférence véhicule utilitaire, de manière particulièrement préférée véhicule utilitaire servant au transport de marchandises ou de personnes présentant une vitesse maximale admissible supérieure à 60 km/h, présentant un dispositif (100) d'alimentation en fluide selon l'une des revendications précédentes.
